(19) **Europäisches Patentamt European Patent Office Office européen des brevets**

(11) **EP 4 254 007 B1**

(12) **FASCICULE DE BREVET EUROPEEN**

(45) Date de publication et mention de la délivrance du brevet:
**27.05.2026 Bulletin 2026/22**

(21) Numéro de dépôt: **23163639.0**

(22) Date de dépôt: **23.03.2023**

(51) Classification Internationale des Brevets (IPC):
**G01S 13/88** (2006.01) **G01S 13/89** (2006.01)
**G06F 18/23** (2023.01)

(52) Classification Coopérative des Brevets (CPC):
**G01S 13/885; G01S 13/89; G06F 18/23**

(54) **PROCEDE DE DETECTION DE STRUCTURES LONGITUDINALES ENTERREES AU MOYEN D'UN RADAR A PENETRATION DE SOL**

**VERFAHREN ZUR DETEKTION VERGRABENER LÄNGSSTRUKTUREN MITTELS EINES BODENDURCHDRINGENDEN RADARS**

**METHOD FOR DETECTING BURIED LONGITUDINAL STRUCTURES USING GROUND PENETRATING RADAR**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.03.2022 FR 2202800**

(43) Date de publication de la demande:
**04.10.2023 Bulletin 2023/40**

(73) Titulaire: **Commissariat à l'Energie Atomique et aux Energies Alternatives 75015 Paris (FR)**

(72) Inventeur: **DORE, Jean-Baptiste 38054 GRENOBLE Cedex 09 (FR)**

(74) Mandataire: **Atout PI Laplace Immeuble Up On 25 Boulevard Romain Rolland CS 40072 75685 Paris Cedex 14 (FR)**

(56) Documents cités:
**US-A1- 2013 321 191 US-B1- 9 965 865**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine des radars à pénétration de sol ou géoradars qui couvrent l'ensemble des techniques permettant de détecter, localiser ou identifier des cibles souterraines au moyen d'un système radiofréquence.

Les cibles souterraines sont, par exemple, des canalisations de diamètre et nature différentes (acier, PVC, ciment, béton...) qui peuvent être enterrées à différentes profondeurs.

Un objectif des radars à pénétration de sol est de localiser de tels objets avec précision afin de pouvoir cartographier correctement un sous-sol, par exemple pour des besoins de sécurité lors de travaux.

Les images fournies par un radar à pénétration de sol sont affectées par des éléments perturbateurs qui peuvent être de plusieurs natures (effet du couplage d'antennes, bruit thermique, interférents radio....). Quand un objet est éclairé par le radar, celui-ci renvoi de l'énergie qui peut être mesurée. Le sol n'étant pas un milieu homogène, les algorithmes d'imagerie font en général apparaitre un fouillis de points d'intérêt. Ce fouillis est constitué de réflexions du signal radar sur une interface entre deux portions du sol de natures différentes ou sur un objet réfléchissant présent dans le sol (type cailloux, enrochements).

Un problème que vise à résoudre la présente invention consiste à détecter et cartographier la présence de canalisations ou plus généralement de structures longitudinales dans le sol en réduisant le fouillis de points d'intérêts présent dans l'image 3D reconstruite à partir des acquisitions de signaux radar.

Les techniques des réductions de fouillis sont largement abordées dans la littérature. La plupart des méthodes existantes peuvent être classées en deux catégories principales : les méthodes basées sur une modélisation du fouillis, et les méthodes visant à réduire le fouillis par filtrage.

Les principaux désavantages des méthodes de modélisation du fouillis reposent sur le fait que la performance des techniques est dépendante du modèle de fouillis adopté, sur la difficulté d'estimer précisément les paramètres du modèle, et/ou sur la connaissance préalable de la réponse du terrain sans cibles. Des techniques basées sur la modélisation des signaux (fouillis et cibles) sont notamment décrites dans les références [1], [2], [3], [4], et [5].

Pour les techniques basées sur le filtrage du fouillis, un inconvénient est que certaines méthodes de ce type filtrent le fouillis avec dégradation du signal correspondant aux cibles, tandis que d'autres doivent assumer l'hypothèse que le signal du fouillis est plus fort que celui des cibles ou que le spectre de fréquence du signal de fouillis est concentré dans une région différente de celle du signal des cibles. Des exemples de telles méthodes sont donnés dans les références [6], [7] et [8].

Par ailleurs, des techniques basées sur de la détection de formes par la transformée de Hough sont décrites dans les articles [9] et [10]. Ces méthodes sont dédiées exclusivement à la détection 2D du radargramme d'un radar à pénétration de sol sur une grille uniforme. Ces méthodes sont basées sur la reconnaissance d'une parabole dans un radargramme pour un radar à une seule antenne d'émission et de réception (dispositif SISO).

On connait par ailleurs les méthodes proposées dans la demande de brevet [11] qui divulgue un procédé de détection de canalisation à partir de deux acquisitions radar d'une scène depuis deux points de vue différents, où l'objet enterré est localisé en maximisant une corrélation entre les deux acquisitions en faisant varier une hypothèse de valeur de constante diélectrique du sol, et le brevet [12] qui concerne le domaine de la reconnaissance d'objets dans des images capturées à l'aide de caméras de profondeur.

L'invention propose un procédé de détection de structures longitudinales dans un nuage de points d'intérêts 3D déterminé à partir de plusieurs acquisitions radars d'une zone du sol. La méthode proposée est basée sur une recherche de lignes dans l'espace 3D dont un nombre de points suffisants du nuage de points sont situés à proximité. La détection de lignes dans l'espace du nuage de points 3D permet de caractériser des formes longitudinales correspondant à des objets à détecter de type canalisations, tuyaux.

Dans une variante de réalisation, l'invention propose également un prétraitement du nuage de points permettant de filtrer les points appartenant au fouillis au moyen d'une recherche de vecteurs unitaires sensiblement colinéaires dans le nuage de points 3D.

Contrairement aux méthodes de modélisation du fouillis, l'invention ne nécessite aucune hypothèse sur une modélisation statistique du fouillis.

Contrairement aux solutions existantes basées sur la transformée de Hough, la solution proposée repose sur un traitement d'un nuage de points 3D ayant un échantillonnage non uniforme, chaque point correspondant à la détection potentielle d'une zone d'intérêt.

L'invention a pour objet un procédé de détection de structures longitudinales enterrées à l'aide d'un radar à pénétration de sol, le procédé comprenant les étapes de :

- Réaliser plusieurs acquisitions de signaux radar pour une zone du sol,

- Déterminer, à partir desdits signaux radars, un nuage de points 3D, chaque point correspondant à une détection radar et étant géolocalisé dans l'espace,

- Rechercher au moins un ensemble de points sensiblement alignés dans le nuage de points 3D en :

  i. Pour chaque droite parmi un ensemble de droites de l'espace 3D, déterminant le nombre de points du nuage de points 3D situés à une distance inférieure à une distance minimale prédéterminée de la droite,

  ii. Déterminant au moins une droite pour laquelle ledit nombre de points est supérieur à un seuil minimum de détection prédéterminé, les points situés à une distance de cette droite inférieure à ladite distance minimale caractérisant une structure longitudinale.

Selon un aspect particulier de l'invention, la recherche d'au moins un ensemble de points sensiblement alignés est réalisée au moyen des étapes de :

- Déterminer au moins une première droite située dans un premier plan pour laquelle un ensemble de points du nuage de points 3D en nombre supérieur audit seuil minimum de détection est situé à une distance de la première droite inférieure à ladite distance minimale,

- Déterminer au moins une seconde droite située dans un second plan, perpendiculaire au premier plan, pour laquelle un sous-ensemble dudit ensemble de points en nombre supérieur audit seuil minimum de détection est situé à une distance de la seconde droite inférieure à ladite distance minimale,

- Les points dudit sous-ensemble caractérisant une structure longitudinale.

Selon un aspect particulier de l'invention, la recherche d'au moins un ensemble de points sensiblement alignés est réalisée au moyen des étapes de :

- Définir trois plans de projections perpendiculaires entre eux dans l'espace 3D et, pour chacun des trois plans, déterminer au moins une droite située dans ledit plan pour laquelle un ensemble de points du nuage de points 3D en nombre supérieur audit seuil minimum de détection est situé à une distance de la droite inférieure à ladite distance minimale,

- Sauvegarder pour chaque droite déterminée à l'étape précédente les ensembles de points situés à une distance de la droite inférieure à ladite distance minimale,

- Construire un ensemble de points caractérisant une structure longitudinale en sélectionnant les points appartenant au moins à deux ensembles de points sauvegardés pour deux plans de projection différents.

Selon un aspect particulier de l'invention, les droites sont définies dans un plan par un premier paramètre de distance entre l'origine d'un repère de référence et la droite et un second paramètre d'angle entre un axe du repère de référence et une ligne perpendiculaire à la droite et passant par l'origine du repère de référence.

Dans une variante de réalisation, le procédé comprend en outre une étape de sélection de lignes pour lesquelles la somme des amplitudes des points de l'ensemble de points situés à une distance de la ligne inférieure à ladite distance minimale est supérieure à un seuil prédéterminé.

Selon un aspect particulier de l'invention, les points du nuage de points 3D sont géolocalisés à l'aide d'un dispositif de géolocalisation du radar à pénétration de sol.

Selon un aspect particulier de l'invention, les acquisitions de signaux radar sont réalisées pour plusieurs plans de la zone du sol.

L'invention a aussi pour objet un radar à pénétration de sol comprend au moins une antenne d'émission et au moins une antenne de réception et un dispositif de détection de structures longitudinales enterrées dans une zone du sol configuré pour exécuter les étapes du procédé de détection selon l'invention.

L'invention a aussi pour objet un programme d'ordinateur comportant des instructions pour l'exécution du procédé selon l'invention, lorsque le programme est exécuté par un processeur.

L'invention a aussi pour objet un support d'enregistrement lisible par un processeur sur lequel est enregistré un programme comportant des instructions pour l'exécution du procédé selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] représente une reconstruction 3D d'une scène comprenant un tuyau et du fouillis avec une méthode d'acquisition radar selon l'art antérieur,

[Fig. 2] représente plusieurs images radars successives de la scène de la figure 1, obtenues avec une méthode d'acquisition selon l'art antérieur,

[Fig. 3] représente un organigramme d'un procédé de détection de structures longitudinales selon un mode de réalisation de l'invention,

[Fig. 4] représente un schéma illustrant la construction d'un nuage de points à partir de plusieurs images radar successives,

[Fig. 5] représente un schéma d'une droite en coordonnées polaires,

[Fig. 6] représente une matrice d'accumulation et un exemple de résultat de détection de lignes dans un nuage de points,

[Fig. 7] représente, sur un organigramme, un second exemple de réalisation du procédé selon l'invention,

[Fig. 8] représente, sur un organigramme, un premier exemple de réalisation du procédé selon l'invention,

[Fig. 9] représente un exemple de résultat de détection de lignes dans un nuage de points,

[Fig. 10] représente un organigramme d'un mode de réalisation particulier du procédé décrit à la figure 3,

[Fig. 11a] représente une illustration d'une étape du procédé de la figure 10,

[Fig. 11b] représente une illustration d'une étape du procédé de la figure 10,

[Fig. 11c] représente une illustration d'une étape du procédé de la figure 10,

[Fig. 11d] représente une illustration d'une étape du procédé de la figure 10,

[Fig. 11e] représente une illustration d'une étape du procédé de la figure 10,

[Fig. 11f] représente une illustration d'une étape du procédé de la figure 10,

[Fig. 11g] représente une illustration d'une étape du procédé de la figure 10,

[Fig. 11h] représente une illustration d'une étape du procédé de la figure 10,

[Fig. 11i] représente une illustration d'une étape du procédé de la figure 10,

[Fig. 11j] représente une illustration d'une étape du procédé de la figure 10,

[Fig. 12] représente un schéma d'un dispositif de détection de lignes selon un premier mode de réalisation de l'invention.

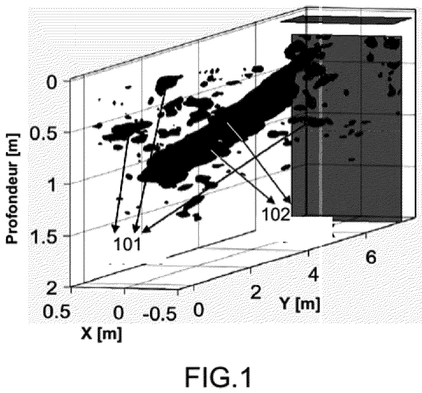

La figure 1 représente une reconstruction 3D d'une scène obtenue au moyen d'acquisitions de mesures réalisées par un radar à pénétration de sol. La scène est caractérisée par la présence d'un tuyau. Comme expliqué en préambule, les images issues d'acquisitions obtenues par un radar à pénétration de sol sont affectées d'éléments perturbateurs appelés fouillis. Sur l'exemple de la figure 1, la reconstruction 3D de points d'intérêts comporte des points appartenant au tuyau 102 que l'on souhaite détecter mais aussi des points 101 appartenant au fouillis.
La scène de la figure 1 est construite à partir de plusieurs images radars obtenues pour plusieurs plans ou coupes successifs de la scène 3D.
Un objectif de l'invention est de réduire les points 101 appartenant au fouillis de sorte à mieux détecter la présence d'une structure longitudinale telle qu'un tuyau ou une canalisation.

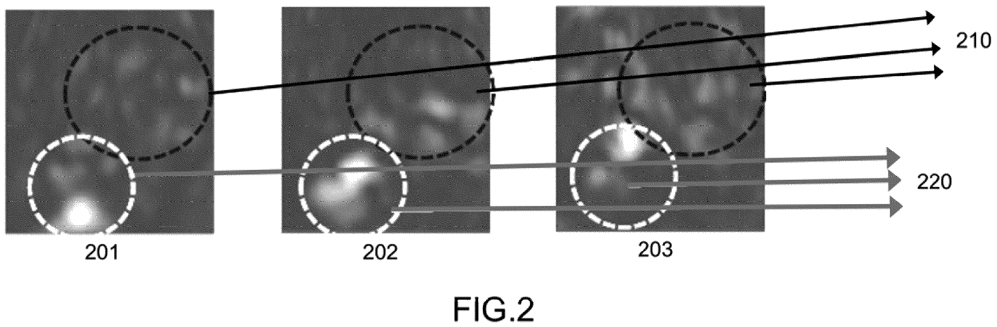

La figure 2 représente trois images radar 201,202,203 obtenues successivement pour trois plans de coupes différents de la scène de la figure 1.

On remarque en analysant ces trois plans de coupes que le fouillis 210 correspond à un bruit qui est cohérent avec la cible à détecter, c'est-à-dire qu'il peut présenter des amplitudes équivalentes à une cible sur une image radar. Cependant le fouillis 210 n'est pas cohérent spatialement lorsque le radar se déplace le long de la scène. Cela est dû notamment au fait que le fouillis est issu de réflexions des signaux radar sur des objets de très petite taille ou sur des interfaces entre deux natures de sol qui peuvent varier spatialement.

A l'inverse, on remarque qu'un objet tel qu'un tuyau présente une cohérence spatiale c'est-à-dire qu'on retrouve les mêmes amplitudes sur différentes images correspondants à différents plans de coupes. Autrement dit, les échos radars d'une telle cible sont spatialement corrélés dans différentes images correspondant à différents plans de coupes.

Cette propriété est exploitée par l'invention pour rechercher, dans un nuage de points du type décrit à la figure 1, des formes rectilignes ou longitudinales, qui correspondent au type de cible à détecter, à savoir des tuyaux ou canalisations.

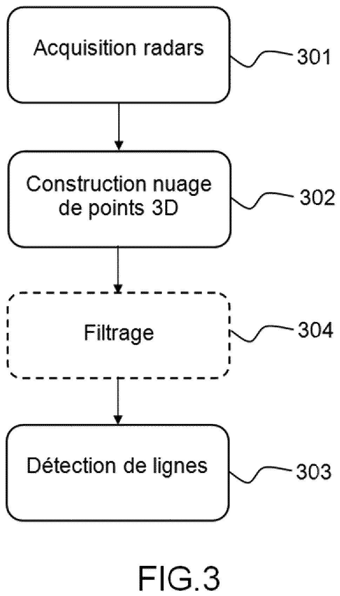

La figure 3 schématise les étapes de mise en œuvre d'un procédé de détection de structures longitudinales selon un mode de réalisation de l'invention.

La première étape 301 consiste à réaliser une acquisition d'images radars selon plusieurs plans de coupes d'une zone du sol, afin d'obtenir des images radars du type décrit à la figure 2.

L'acquisition d'images radars est réalisée au moyen d'un radar à pénétration de sol comprenant au moins une antenne d'émission et une antenne de réception.

Le radar se déplace sur la zone à imager afin de réaliser plusieurs acquisitions successives. Les signaux bruts mesurés sont traités afin de générer une image radar dont chaque point présente une intensité caractéristique de la réflexion des signaux sur une cible enterrée.

L'étape 301 du procédé peut être réalisée par exemple au moyen de la méthode d'acquisition décrite dans la demande de brevet FR 3111994 du Demandeur. Cette demande décrit l'utilisation d'un radar dit MIMO (Multiple Input Multiple Output) ayant plusieurs antennes d'émission et de réception couplé à un algorithme de démodulation pour produire l'image radar. Toute autre méthode d'acquisition radar permettant de générer des images radar de plusieurs plans de coupe d'une zone 3D peut être utilisée.

A l'étape 302, on construit ensuite un nuage de points 3D à partir des différentes images radars des plans de coupe de la scène. Cette étape nécessite une géolocalisation des prises de vues de chaque image afin d'en déduire une position des plans de coupe et donc des points. La géolocalisation peut être réalisée au moyen d'un dispositif de réception de signaux de radionavigation par satellites, type GPS, ou odomètre ou plus généralement tout type de dispositif de localisation.

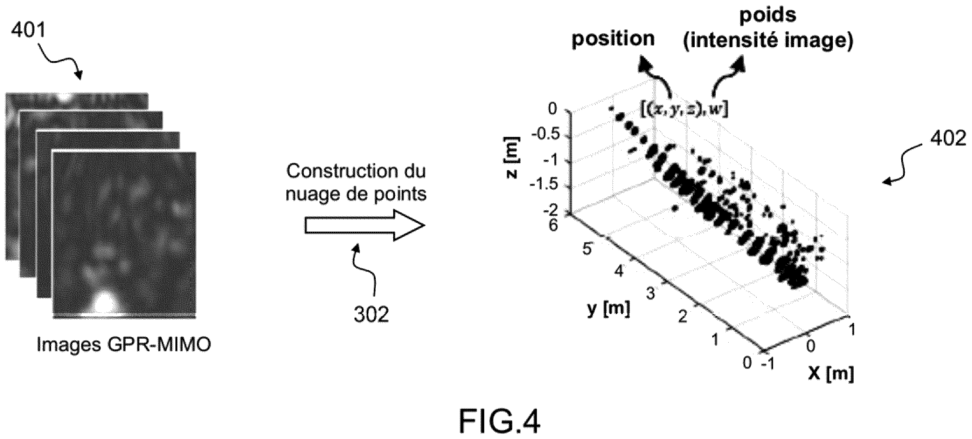

La figure 4 illustre l'étape 302 sur un exemple. Les images radars 401 sont transformées en un nuage de points 402 en trois dimensions dans lequel chaque point représente une intensité mesurée sur les images radars et localisée dans l'espace 3D par ses coordonnées spatiales.

A l'étape 303 on applique ensuite une méthode de détection de points alignés au nuage de points 3D 402 afin de détecter des lignes, correspondant à des cibles à détecter et d'éliminer les points qui appartiennent au fouillis.

L'étape 303 consiste en une recherche de droite dans l'espace 3D telle qu'un ensemble de points du nuage de points 3D 402 sont situés à proximité de cette droite.

Pour cela, on utilise une représentation des droites en coordonnées polaires.

Une première représentation possible d'une droite dans l'espace 2D est donnée par l'équation :

$$y = tan\Phi_0 x + b_0$$

Une droite peut donc être définie dans un plan par le couple de paramètres ($\Phi_0$, $b_0$).

De façon similaire, l'équation d'une droite dans l'espace est donnée par :

$$P = (x, tan\Phi_0 x + b_0, tan\Phi_1 x + b_1)$$

Une droite dans l'espace peut être définie par les quatre paramètres ($\Phi_0$, $b_0$, $\Phi_1$, $b_1$).

Un inconvénient des représentations précédentes est que la pente *tan*$\Phi_0$ tend vers l'infini lorsque la droite tend vers une parallèle à l'axe (Oy) ce qui empêche la représentation de ce type de droite.

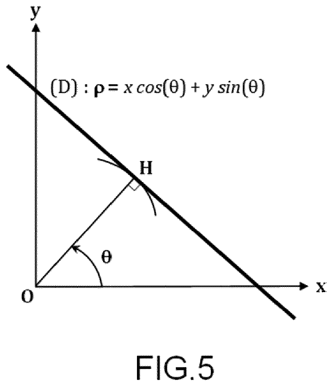

Pour résoudre cet inconvénient, une autre représentation est proposée en figure 5.

La figure 5 schématise une droite D définie dans un plan (O,x,y) par l'équation :

$$\rho = x.\cos(\theta) + y.\sin(\theta)$$

Avec [OH] le segment perpendiculaire à la droite D de longueur $\rho$ et formant un angle $\theta$ avec l'axe (Ox).

Chaque droite D peut donc être représentée par ses paramètres $(\rho, \theta)$.

De façon similaire, l'équation d'une droite dans l'espace est définie par quatre paramètres $(\rho_1, \theta_1, \rho_2, \theta_2)$ comme l'intersection de deux plans.

L'étape 303 du procédé selon l'invention consiste, pour chaque droite définie par un jeu de quatre paramètres $(\rho_1, \theta_1, \rho_2, \theta_2)$ variant dans un ensemble prédéfini, à calculer une distance, par exemple une distance euclidienne, entre chaque point du nuage de points et la droite. Ensuite, on conserve les points dont la distance à la droite est inférieure à une distance minimale et on compte le nombre de points obtenus.

On itère le processus pour toutes les droites possibles de l'espace selon un échantillonnage prédéfini.

Ensuite on conserve uniquement les droites pour lesquelles l'ensemble de points détecté à proximité contient un nombre de points supérieur à un nombre minimum permettant de caractériser une structure longitudinale.

Ainsi, le procédé selon l'invention permet de détecter une ou plusieurs lignes dans le nuage de points 3D, ces lignes reliant approximativement un ensemble de points du nuage ou étant proches de cet ensemble. Chaque ensemble de points à proximité d'une ligne détectée correspond à une structure longitudinale que l'on souhaite détecter dans le nuage de points.

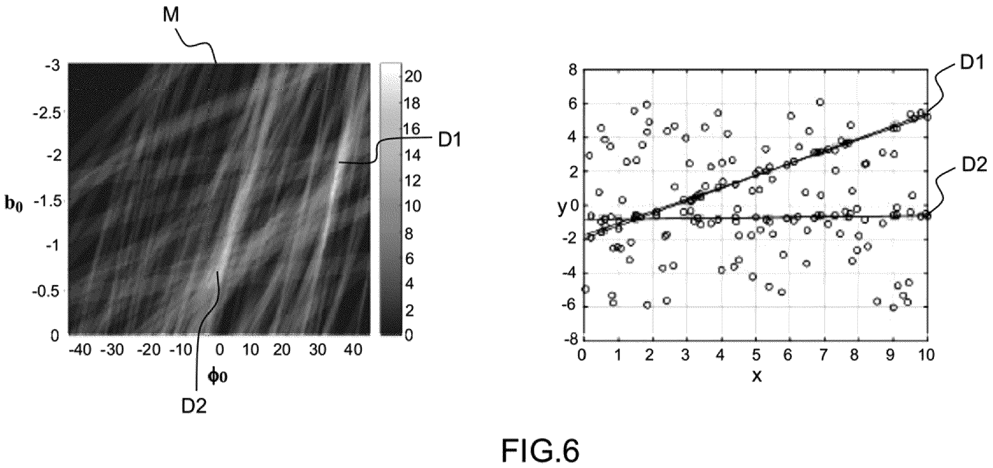

La figure 6 schématise, à titre illustratif, sur la gauche de la figure, un exemple d'une matrice M d'accumulation donnant pour chaque droite d'un plan définie par un couple de paramètres $(\Phi_0, b_0)$, le nombre de points d'un nuage de points à proximité de cette droite. Sur la droite de la figure 6 on a représenté un nuage de points dans un plan (0,x,y) dans lequel sont détectées deux lignes D1,D2. Ces deux lignes D1,D2 sont identifiées également sur la matrice M par deux points d'amplitude maximale dans le plan $(\Phi_0, b_0)$.

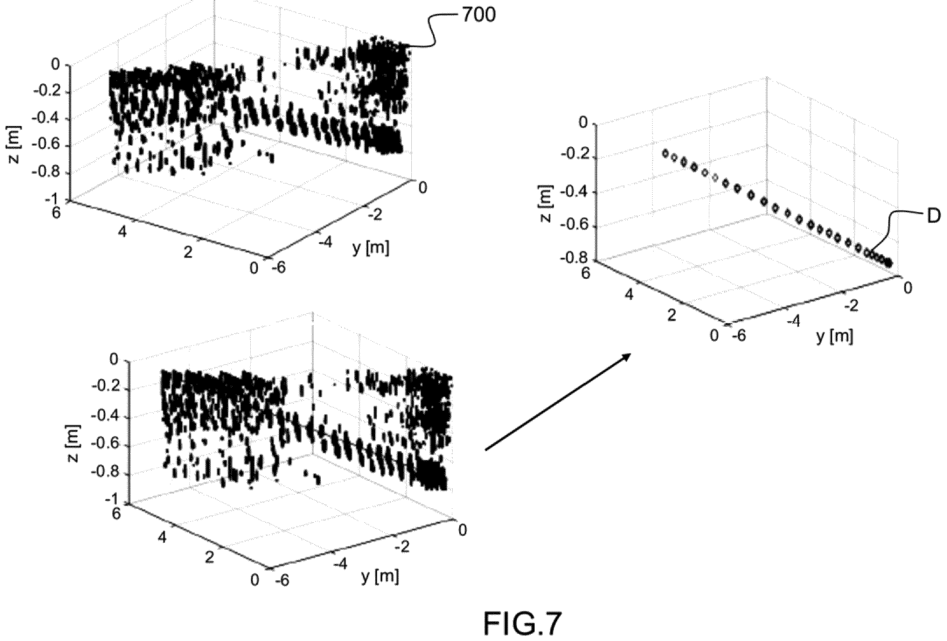

La figure 7 schématise un exemple de résultats de détection d'une ligne D dans l'espace 3D à partir d'un nuage de points 701.

Plusieurs implémentations sont envisageables pour réaliser l'étape de détection de lignes 303 du procédé selon l'invention dans l'espace 3D.

Selon une première variante de réalisation, la détection de lignes est réalisée selon une approche par plans successifs en réalisant un balayage de l'espace défini par un couple de paramètres $(\rho, \theta)$ sur deux plans orthogonaux, par exemple les plans (XY) et (XZ).

Plus précisément, une première recherche est faite pour déterminer les ensembles de points du nuage de points 3D qui sont proches des droites de paramètres $(\rho, \theta)$ dans un premier plan (par exemple le plan (XY)). Ensuite, parmi les points sélectionnés lors de cette première recherche, une deuxième recherche est réalisée pour les droites du second plan (par exemple le plan (XZ)).

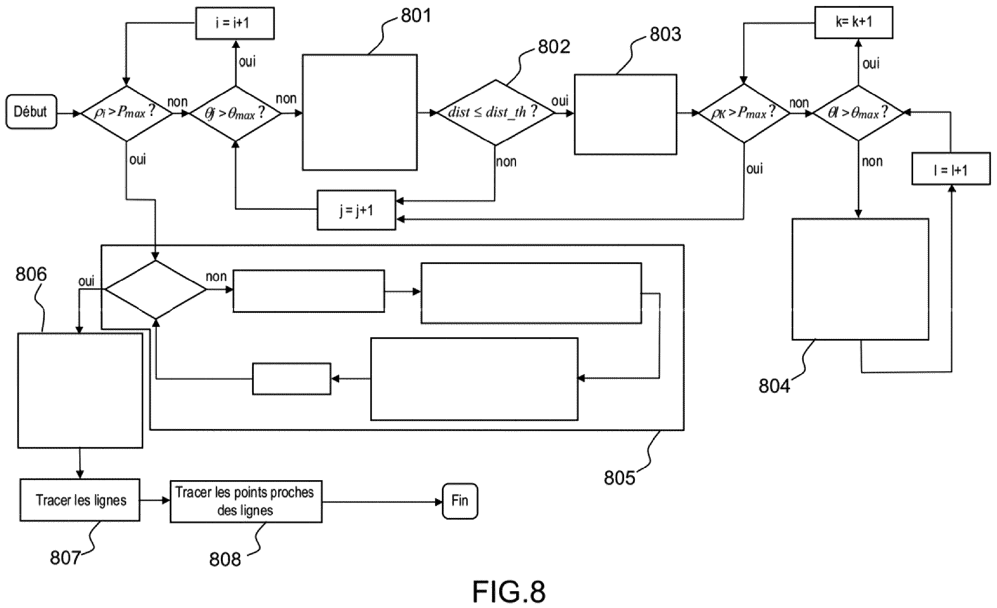

La figure 8 illustre un exemple d'implémentation de cette première variante de réalisation.

On note $(\rho_i, \theta_j)$ les paramètres des droites dans le plan (XY) et $(\rho_k, \theta_l)$ les paramètres des droites dans le plan (XZ). On fait varier ces paramètres dans les intervalles $[0; \rho_{max}]$ et $[0; \theta_{max}]$ respectivement.

A l'étape 801, on calcule une distance entre chaque point du nuage de points 3D et la droite définie par les paramètres $(\rho_i, \theta_j)$ dans le plan (XY). La distance est, par exemple, une distance euclidienne entre un point et sa projection sur la droite.

A l'étape 802, on compare chaque distance calculée à l'étape 801 avec une distance seuil *dist_th*. Si la distance est supérieure à la distance seuil, alors le point n'est pas retenu, sinon on passe à l'étape 803 où l'on sélectionne les points P dont la distance est inférieure à la distance seuil *dist_th* pour former un ensemble de points proches de la droite $(\rho_i, \theta_j)$.

Ensuite parmi l'ensemble de points P déterminé à l'étape 803 pour la droite $(\rho_i, \theta_j)$ on détermine le nombre de points proches de chaque droite du plan (XZ) paramétré par les paramètres $(\rho_k, \theta_l)$ et on sauvegarde ces nombres dans une matrice A.

Le processus est itéré pour toutes les droites du premier plan (XY).

On obtient à l'issue des étapes 801-804, une matrice A donnant pour chaque couple de droites paramétrées par $(\rho_i, \theta_j, \rho_k, \theta_l)$, le nombre de points du nuage de points à proximité de ces deux droites.

Ensuite à l'étape 805, on recherche les maxima de la matrice A pour déterminer les ensembles de points correspondant à nbmax lignes, avec nbmax le nombre de lignes à rechercher dans l'espace 3D.

A l'étape 806 on conserve uniquement les droites et ensembles de points associés pour lesquels le nombre de points de l'ensemble est supérieur à un seuil de détection correspondant à un nombre minimum de points permettant de caractériser une structure longitudinale.

A l'étape 807, on trace les lignes obtenues puis à l'étape 808 on sélectionne les points proches de ces lignes.

Pour réaliser l'étape 808, c'est-à-dire sélectionner les points du nuage de points qui correspondent aux lignes obtenues dans l'espace 3D à partir des lignes déterminées pour deux plans de projection (XY) et (XZ), on recherche pour chaque couple de lignes appartenant respectivement aux deux plans, le nombre de points en commun de ces deux lignes et si ce nombre est supérieur à un seuil prédéterminé Tu, on ajoute ces points à une liste de points retenus.

Un inconvénient de la première variante de réalisation illustrée à la figure 8 est le cout en termes de calcul du fait de la nécessité d'un balayage de l'espace en faisant varier 4 paramètres (deux paramètres de coordonnées polaires par plan).

Selon une seconde variante de réalisation, l'étape de détection de lignes 303 peut être réalisée par un algorithme approximé qui présente un cout en complexité moindre par rapport à la première variante.

Cette seconde variante consiste à balayer les trois plans de projection de l'espace 3D, à savoir les plans (XY), (YZ) et (XZ) indépendamment de manière à accélérer le processus de détection de ligne.

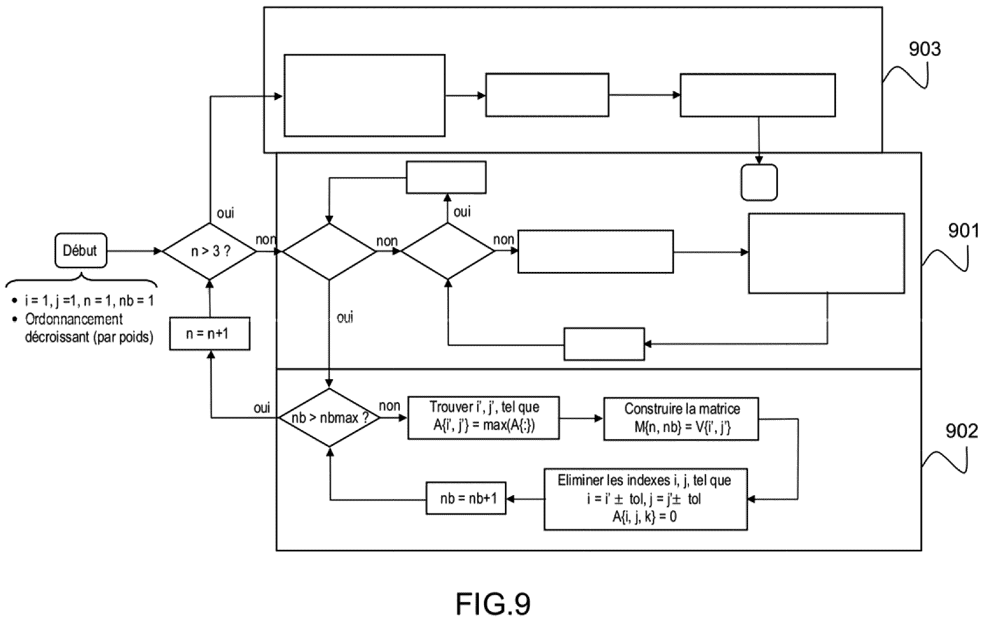

La figure 9 illustre, sur un organigramme, les étapes de mise en œuvre de cette seconde variante.

Pour chaque plan de projection (indicé par l'indice n sur la figure 9), on procède à un balayage de l'ensemble des droites du plan en faisant varier le couple de paramètres ($\rho_i$, $\theta_j$) en recherchant les points du nuage de points les plus proches de chaque droite (étapes 901).

Les indexes des ensembles de points proches de chaque droite sont conservés dans une matrice V(i,j) et le nombre de points de chaque ensemble est conservé dans une matrice A(i,j).

Comme pour la première variante, la proximité des points est mesurée par un paramètre qui définit une distance euclidienne maximale entre la ligne définie par ($\rho_i$, $\theta_j$) et les points du nuage. Les indexes des points en deçà de la distance maximale sont enregistrés dans la matrice V, qui est utilisée plus tard pour permettre le traçage des lignes.

L'étape suivante 902 consiste à construire, à partir des indexes sauvegardés dans la matrice V, une matrice M qui contient, pour chaque plan de projection, les occurrences les plus élevées du nombre d'indexes. Une occurrence correspond aux indexes des points du nuage proches de la droite obtenue à partir de ($\rho_i$, $\theta_j$). Le nombre d'occurrences maximal correspondant au nombre de lignes maximal à détecter est défini par le paramètre nbmax. La valeur de ce paramètre est telle que le nombre des cibles existantes soit couvert. Ces occurrences sont enregistrées par la taille décroissante du nombre des indexes proches des lignes définies à partir de ($\rho_i$, $\theta_j$).

Cette matrice M est construite à l'aide d'une autre matrice A qui garde, à son tour, le nombre d'indexes des points proches d'une ligne. Afin d'éliminer des occurrences similaires (lignes proches), une tolérance est établie sur les indexes de la matrice A et, celle-ci, mise à zéro pour l'ensemble d'indexes dans la marge de tolérance.

Ainsi, à l'issue de l'étape 902, on retient les droites (en nombre maximum égal à nbmax) pour lesquels le nombre de points situés à proximité est le plus élevé.

Les opérations 901,902 sont réalisées pour chacun des trois plans (XY), (YZ) et (XZ) indépendamment.

Ensuite, un système de vote 903 est mis en œuvre pour sélectionner les lignes dans l'espace 3D.

L'étape 903 consiste tout d'abord à établir un seuil afin de conserver les occurrences les plus élevées parmi les nbmax occurrences. Cela évite de tracer, par la suite, des courts segments de points alignés qui ne correspondent pas à une cible que l'on souhaite détecter. Autrement dit, il existe un nombre de points alignés minimum correspondant à une structure longitudinale.

Ensuite, on combine les matrices M obtenues pour les 3 plans, par exemple en retenant les ensembles de points présents sur au moins deux des trois plans de projection.

Le critère de sélection des indexes de points qui définissent une ligne finalement retenue dans l'espace 3D est donné par :

$$S^{(nb*)} = (S^{(nb*)}{}_{XY} \cap S^{(nb*)}{}_{XZ}) \cup (S^{(nb*)}{}_{XZ} \cap S^{(nb*)}{}_{YZ}) \cup (S^{(nb*)}{}_{XY} \cap S^{(nb*)}{}_{YZ}),$$

avec $S^{(nb*)}{}_{XY}$, $S^{(nb*)}{}_{XZ}$, $S^{(nb*)}{}_{YZ}$ les ensembles d'indexes de points obtenus pour chacun des trois plans de projections pour l'occurrence nb*.

Une fois l'ensemble d'indexes de points déterminé pour chaque occurrence nb* (correspondant à une droite), on trace la ligne qui s'approche le plus de l'ensemble de points correspondant, puis on trace les points du nuage de points 3D les plus proches de cette ligne en refaisant un calcul de distance entre tous les points du nuage et la ligne finalement retenue.

Dans une variante de réalisation, la méthode décrite à la figure 9 peut être réalisée pour un seul des trois plans de projection ou pour seulement deux plans de projection parmi les trois plans en adaptant le critère de sélection des indexes de points finalement retenu.

Dans une autre variante de réalisation, une étape de filtrage 304 des points du nuage de points 3D est réalisée avant l'étape de détection de lignes 303.

L'étape de filtrage 304 est réalisée via une méthode de détection de points alignés dans le nuage de points 3D afin d'éliminer les points appartenant au fouillis.

L'étape 304 consiste en une étape de recherche de vecteurs unitaires similaires, autrement dit des vecteurs unitaires sensiblement colinéaires entre couples de points formant ainsi une ligne.

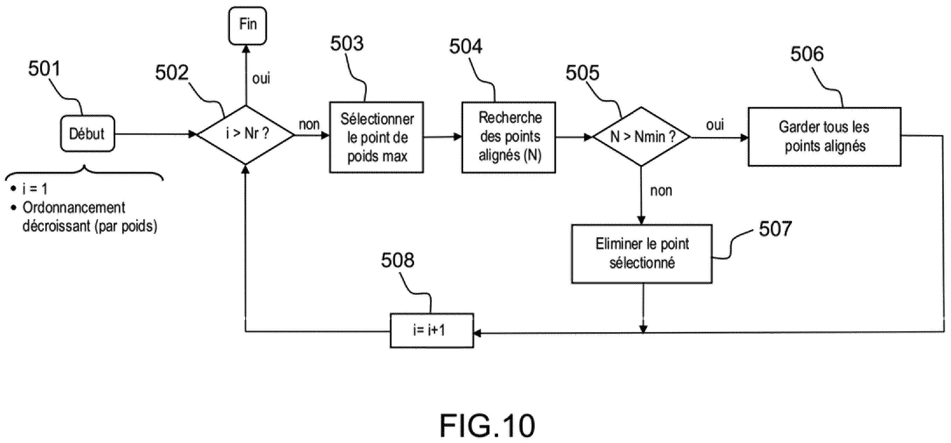

La figure 10 décrit en détail un exemple de mise en œuvre de l'étape 304.

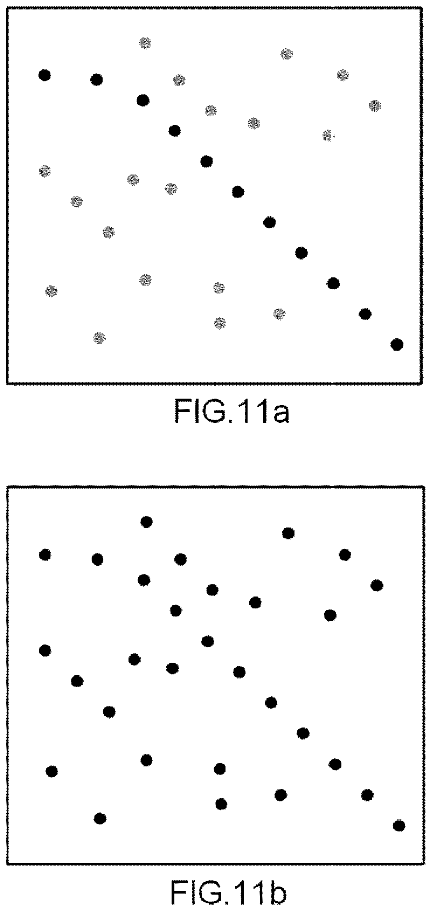

L'algorithme de la figure 10 est illustré sur un exemple donné aux figures 11a à 11j.

La figure 11b représente, schématiquement, un ensemble de points d'un nuage de points 3D reçu en entrée de l'étape 304. Pour simplifier, le nuage de points de la figure 11b est représenté en deux dimensions mais le principe décrit s'applique à l'identique pour un nuage en trois dimensions.

Sur la figure 11a, on a représenté le même nuage de points en identifiant avec des points plus foncés ceux qui correspondent à une canalisation décrivant sensiblement une ligne.

L'algorithme de la figure 10 débute à l'étape 501 où les points du nuage de points 3D sont ordonnancés dans une liste à traiter selon un ordre décroissant de leurs amplitudes.

Un indice i est initialisé à 1 correspondant au nombre de lignes à détecter dans le nuage de points. A l'étape 502, le procédé est poursuivi si i est inférieur ou égal à Nr le nombre maximum de lignes que l'on souhaite détecter.

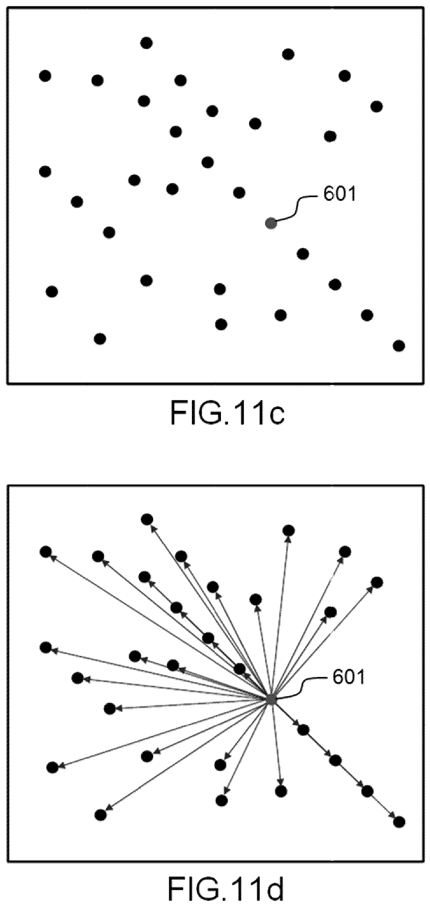

A l'étape 503, on sélectionne le premier point de la liste (celui d'amplitude la plus élevée). Cette étape est illustrée à la figure 11c par le point 601.

A l'étape 504, on recherche l'ensemble des points qui sont alignés ou sensiblement alignés avec le point sélectionné 601.

Pour cela, on détermine tout d'abord tous les vecteurs unitaires ayant comme point de départ le point sélectionné 601 et dont la direction est donnée par l'un des autres points du nuage de points. Cette étape est illustrée à la figure 11d.

Les vecteurs unitaires sont donnés par la formule :

$$u_{jk} = \frac{p_j - p_k}{\|p_j - p_k\|},$$

où $p_k$ est le point d'origine 601 et $p_j$ est le point d'arrivée.

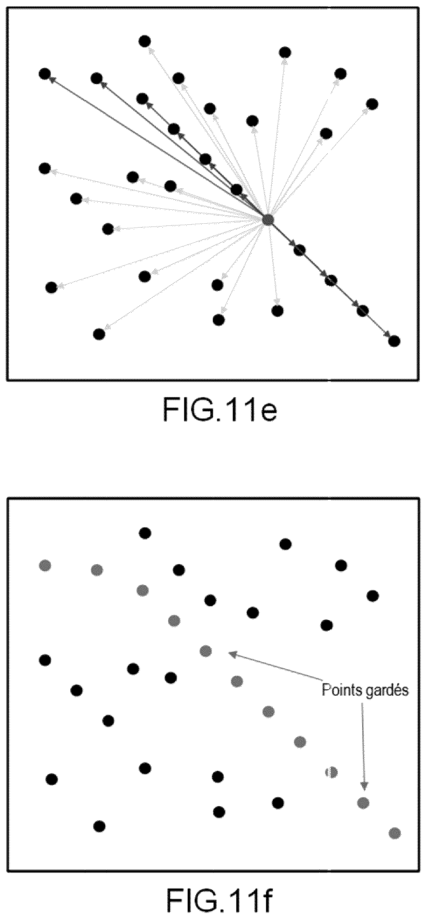

Parmi tous les vecteurs unitaires calculés, on retient ceux qui sont sensiblement colinéaires avec une marge de tolérance prédéterminée. Cette étape est représentée à la figure 11e.

Plusieurs solutions sont possibles pour déterminer l'ensemble des vecteurs sensiblement colinéaires.

Une première solution consiste à exécuter les étapes suivantes.

En premier lieu, on applique une rotation de 180° sur les vecteurs unitaires dont une coordonnée (par exemple la coordonnée en x) est négative :

$$si\ u_{jkx} < 0\ \rightarrow\ u_{jk} = -u_{jk}$$

Cette étape permet de pointer tous les vecteurs unitaires quasiment alignés dans une direction commune.

Ensuite, on approxime à n chiffres significatifs chaque composante de $u_{jk}$. Par exemple n est pris égal à 2 ou 3. L'utilisation de n >3 est conseillée seulement dans un scénario très bruité.

Ensuite on calcule, pour chaque composante, la valeur dominante parmi l'ensemble des vecteurs unitaires approximés. C'est-à-dire qu'on recherche le plus grand ensemble de vecteurs ayant la même valeur approximée de composante.

Ensuite on combine les résultats obtenus pour les trois composantes x,y,z afin de déterminer les points quasiment alignés, avec une tolérance donnée par l'approximation par le nombre n.

Une combinaison possible consiste à rassembler tous les points présents sur au moins deux plans de projections. Autrement dit, si on note $I_x$, $I_y$, $I_z$ les ensembles d'indexes des points du nuage avec les valeurs les plus récurrentes sur les composantes x,y,z respectivement, l'ensemble de points quasiment alignés est donné par la formule suivante :

$$I = (I_x \cap I_y) \cup (I_x \cap I_z) \cup (I_y \cap I_z),$$

où $\cup$ désigne l'opérateur union et $\cap$ désigne l'opérateur intersection.

Une autre approche possible consiste à mesurer l'angle entre chaque couple de vecteurs unitaires et à conserver l'ensemble des points pour lesquels la valeur absolue de cet angle ne dépasse pas un seuil prédéterminé proche de 0 et dimensionné pour accepter une certaine tolérance dans l'alignement des points.

Une troisième approche possible consiste à transformer les vecteurs unitaires en coordonnées sphériques ($r, \theta, \varphi$) et à introduire une tolérance sur les variations angulaires des composantes angulaires ($\theta, \varphi$).

Pour cela, on calcule un histogramme des valeurs de chaque composante angulaire ($\theta, \varphi$). L'histogramme est défini par un pas qui donne la tolérance souhaitée sur la variation angulaire.

Ensuite on détermine les valeurs les plus récurrentes dans ces deux histogrammes en prenant en compte les

**EP 4 254 007 B1**

ambiguïtés de phases (modulo $\pi$).

L'ensemble de points quasi alignés recherché correspond à l'intersection des points ayant les valeurs les plus récurrentes respectivement sur les deux composantes angulaires.

A l'issue de l'étape 504, on obtient donc un ensemble de points quasi alignés avec le point sélectionné à l'étape 503.

Ensuite, à l'étape 505 on compare le nombre de points de l'ensemble obtenu avec un seuil $N_{min}$ qui est un nombre minimum de points considéré comme appartenant à une cible. Ce seuil est fixé en fonction du type de structure que l'on souhaite détecter. Dans le cas de canalisations ou tuyaux, ce seuil permet d'exclure la détection d'objets de petite taille qui peuvent plutôt appartenir au fouillis. La valeur du seuil $N_{min}$ dépend notamment de la résolution du déplacement du radar. Si les mesures réalisées par le radar sont très espacées spatialement, la valeur du seuil $N_{min}$ peut être prise basse. Si à l'inverse les mesures sont peu espacées, cette valeur peut être prise plus élevée. La valeur du seuil $N_{min}$ dépend également de la taille de la zone 3D balayée par le radar ainsi que de la longueur des structures à détecter. La valeur du seuil $N_{min}$ est par exemple prise dans l'intervalle [10 ;50].

Si le nombre de points de l'ensemble est strictement supérieur à $N_{min}$ alors, à l'étape 506 on conserve tous les points alignés que l'on associe à une structure détectée. Les points sont ensuite retirés de la liste à traiter et on incrémente (étape 508) l'indice i de la liste pour passer au point suivant d'amplitude la plus élevée parmi les points restants.

Si le nombre de points de l'ensemble est inférieur ou égal à $N_{min}$ alors le point sélectionné à l'étape 503 est éliminé (étape 507) de la liste à traiter et est considéré comme appartenant au fouillis, il est donc filtré du nuage de points 3D.

Les étapes 505 à 507 sont illustrées aux figures 11f à 11j. La figure 11f illustre les points quasi alignés conservés après la première itération.

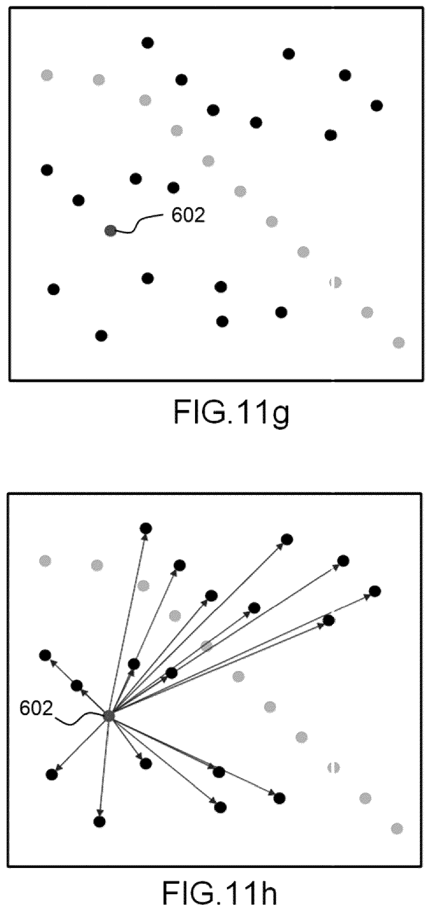

La figure 11g montre une 2eme itération du processus avec la sélection d'un autre point 602 d'amplitude la plus élevée parmi les points restants dans la liste à traiter. La figure 11h montre les vecteurs unitaires calculés à partir du point 602.

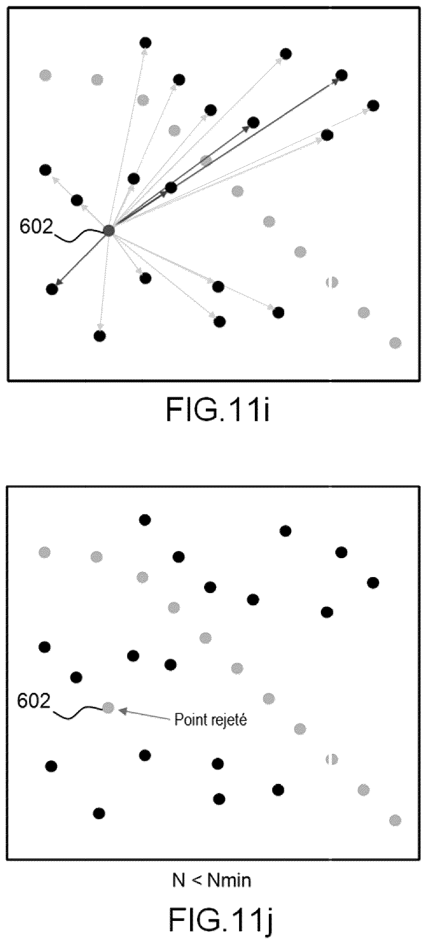

La figure 11i montre les points quasi alignés conservés. Dans cet exemple, le nombre de points quasi alignés est inférieur à $N_{min}$ et donc le point 602 est filtré (figure 11j).

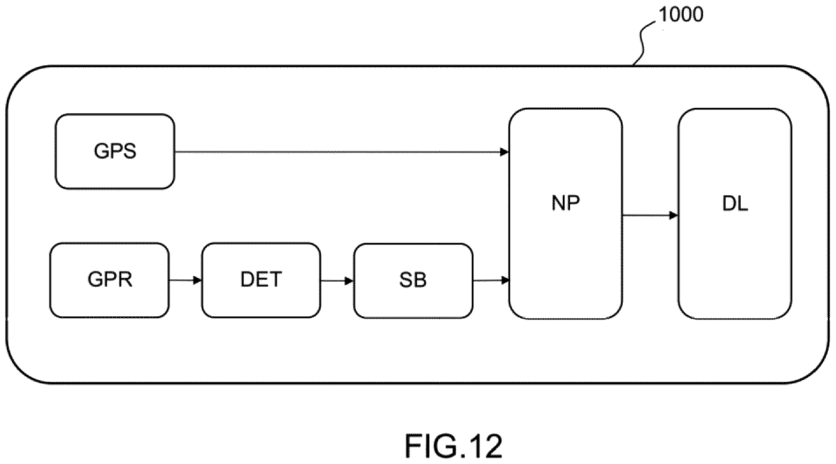

La figure 12 schématise un dispositif de détection radar selon l'invention. Le dispositif 1000 comporte un module d'acquisition de signaux radar GPR, un module de géolocalisation GPS, un module de détection radar DET permettant de générer des images radar de plusieurs plans d'une zone du sol à partir des signaux radar acquis par le module GPR. Un module SB de seuillage binaire est ensuite appliqué aux images radar afin de ne conserver que les points correspondant à des détections de cibles potentielles. Un module NP de création d'un nuage de points 3D est appliqué au résultat des images binarisés en tenant compte des informations de géolocalisation. Enfin, un module de détection de lignes DL configuré pour exécuter les étapes du procédé de détection de lignes selon l'invention décrit ci-dessus est appliqué au nuage de points.

Les différents modules DET,SB,NP,SVU peuvent être réalisés sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

<u>Références</u>

[1] G. Zhan, L. Tsang, and K. Pak, "Studies of the angular correlation function of scattering by random rough surfaces with and without a buried object," IEEE Trans. Geosci. Remote Sens., vol. 35, no. 2, pp. 444-453, Mar. 1997.

[2] T. Dogaru and L. Carin, "Time-domain sensing of targets buried under a rough air-ground interface," IEEE Trans. Antennas Propag., vol. 46, no. 3, pp. 360-372, Mar. 1998.

[3] J. Brooks, L. van Kempen, and H. Sahli, "A primary study in adaptive clutter reduction and buried minelike target enhancement from GPR data," in Proc. SPIE Detection and Remediation Technology for Mines and Minelike Targets V, 2000, pp. 1183-1192.

[4] M. El-Shenawee and C. Rappaport, "Monte Carlo simulations for clutter statistics in minefields: AP-mine-like-target buried near a dielectric object beneath 2-D random rough surfaces," IEEE Trans. Geosci. Remote Sens., vol. 40, no. 6, pp. 1416-1426, Jun. 2002.

[5] D. D. Carevic, M. Craig, and I. Chant, "Modelling GPR echoes from landmines using linear combination of exponentially damped sinusoids," in Proc. SPIE Detection and Remediation Technology for Mines and Minelike Targets II, 1998, vol. 3079, pp. 1022-1032.

[6] Raffaele Solimene, A. Cuccaro, A. Dell'Aversano, Ilaria Catapano and Francesco Soldovieri, "Ground Clutter Removal in GPR Surveys". IEEE journal of selected topics in applied earth observations and remote sensing, vol. 7, no. 3, march 2014

[7] U. S. Khan and W. Al-Nuaimy, "Background removal from GPR data using Eigen values," presented at the 13th Int. Conf. Ground Penetrating Radar (GPR), Lecce, Italy, 2010.

[8] R. Solimene and A. D'Alterio, "Entropy based clutter rejection for intra-wall diagnostics," Int. J. Geophys., vol. 2012, p. 7, 2012.

[9] Capineri, Lorenzo et al. "Advanced image-processing technique for real-time interpretation of ground-penetrating radar images." International Journal of Imaging Systems and Technology 9 (1998)

[10] Carlotto, Mark, "Detecting buried mines in ground penetrating radar using a Hough transform approach". Proceedings of SPIE - The International Society for Optical Engineering, 4741. 10.1117/12.478719, 2002.

[11] US 2013/321191 A1 (PEETZ BRUCE [US]) 5 décembre 2013 (2013-12-05).

[12] US 9 965 865 B1 (AGRAWAL AMIT KUMAR [US] ET AL) 8 mai 2018 (2018-05-08).

## Revendications

1. Procédé de détection de structures longitudinales enterrées à l'aide d'un radar à pénétration de sol, le procédé comprenant les étapes de :

   - Réaliser (301) plusieurs acquisitions de signaux radar pour une zone du sol,
   - Déterminer (302), à partir desdits signaux radars, un nuage de points 3D, chaque point correspondant à une détection radar et étant géolocalisé dans l'espace,

   le procédé étant **caractérisé en ce qu'**il comprend en autre l'étape de:

   - Rechercher (303) au moins un ensemble de points sensiblement alignés dans le nuage de points 3D en :

     i. Pour chaque droite parmi un ensemble de droites de l'espace 3D, déterminant le nombre de points du nuage de points 3D situés à une distance inférieure à une distance minimale prédéterminée de la droite,
     ii. Déterminant au moins une droite pour laquelle ledit nombre de points est supérieur à un seuil minimum de détection prédéterminé, les points situés à une distance de cette droite inférieure à ladite distance minimale caractérisant une structure longitudinale.

2. Procédé de détection selon la revendication 1 dans lequel la recherche (303) d'au moins un ensemble de points sensiblement alignés est réalisée au moyen des étapes de :

   - Déterminer au moins une première droite située dans un premier plan pour laquelle un ensemble de points du nuage de points 3D en nombre supérieur audit seuil minimum de détection est situé à une distance de la première droite inférieure à ladite distance minimale,
   - Déterminer au moins une seconde droite située dans un second plan, perpendiculaire au premier plan, pour laquelle un sous-ensemble dudit ensemble de points en nombre supérieur audit seuil minimum de détection est situé à une distance de la seconde droite inférieure à ladite distance minimale,
   - Les points dudit sous-ensemble caractérisant une structure longitudinale.

3. Procédé de détection selon la revendication 1 dans lequel la recherche d'au moins un ensemble de points sensiblement alignés est réalisée au moyen des étapes de :

- Définir trois plans de projections perpendiculaires entre eux dans l'espace 3D et, pour chacun des trois plans, déterminer au moins une droite située dans ledit plan pour laquelle un ensemble de points du nuage de points 3D en nombre supérieur audit seuil minimum de détection est situé à une distance de la droite inférieure à ladite distance minimale,
- Sauvegarder pour chaque droite déterminée à l'étape précédente les ensembles de points situés à une distance de la droite inférieure à ladite distance minimale,
- Construire un ensemble de points caractérisant une structure longitudinale en sélectionnant les points appartenant au moins à deux ensembles de points sauvegardés pour deux plans de projection différents.

4. Procédé de détection selon l'une quelconque des revendications précédentes dans lequel les droites sont définies dans un plan par un premier paramètre de distance entre l'origine d'un repère de référence et la droite et un second paramètre d'angle entre un axe du repère de référence et une ligne perpendiculaire à la droite et passant par l'origine du repère de référence.

5. Procédé de détection selon l'une quelconque des revendications précédentes comprenant en outre une étape de sélection de lignes pour lesquelles la somme des amplitudes des points de l'ensemble de points situés à une distance de la ligne inférieure à ladite distance minimale est supérieure à un seuil prédéterminé.

6. Procédé de détection selon l'une quelconque des revendications précédentes dans lequel les points du nuage de points 3D sont géolocalisés à l'aide d'un dispositif de géolocalisation du radar à pénétration de sol.

7. Procédé de détection selon l'une quelconque des revendications précédentes dans lequel les acquisitions de signaux radar sont réalisées pour plusieurs plans de la zone du sol.

8. Radar à pénétration de sol (1000) comprenant au moins une antenne d'émission et au moins une antenne de réception et un dispositif de détection de structures longitudinales enterrées dans une zone du sol configuré pour exécuter les étapes du procédé de détection selon l'une quelconque des revendications précédentes.

9. Programme d'ordinateur comportant des instructions pour l'exécution du procédé selon l'une quelconque des revendications 1 à 7, lorsque le programme est exécuté par un processeur du radar de la revendication 8.

10. Support d'enregistrement lisible par un processeur sur lequel est enregistré un programme comportant des instructions pour l'exécution du procédé selon l'une quelconque des revendications 1 à 7, lorsque le programme est exécuté par un processeur du radar de la revendication 8.

**Patentansprüche**

1. Verfahren zur Detektion vergrabener Längsstrukturen mithilfe eines bodendurchdringenden Radars, wobei das Verfahren die Schritte umfasst zum:

- Durchführen (301) Erfassungen von Radarsignalen für eine Zone des Bodens,
- Bestimmen (302) einer 3D-Punktwolke aus den Radarsignalen, wobei jeder Punkt einer Radardetektion entspricht und im Raum geolokalisiert wird, wobei das Verfahren **dadurch gekennzeichnet ist, dass** es einen anderen Schritt umfasst zum:

  - Suchen (303) mindestens einer im Wesentlichen in der 3D-Punktwolke ausgerichteten Anordnung von Punkten durch:

    i. Für jede Gerade aus einer Anordnung von Geraden des 3D-Raumes, welche die Anzahl an Punkten der 3D-Punktwolke bestimmt, die sich in einem Abstand zur Geraden befinden, der geringer ist als ein vorbestimmter Mindestabstand,
    ii. Bestimmen mindestens einer Geraden, bei der die Anzahl an Punkten größer als eine vorbestimmte Mindestdetektionsschwelle ist, wobei sich die Punkte in einem Abstand zu dieser Geraden befinden, der geringer ist, als der Mindestabstand, der eine Längsstruktur kennzeichnet.

2. Verfahren zur Detektion nach Anspruch 1, wobei die Suche (303) mindestens einer Anordnung von im Wesentlichen ausgerichteten Punkten anhand der Schritte durchgeführt wird zum:

- Bestimmen mindestens einer ersten Geraden, die sich in einer ersten Ebene befindet, bei der sich eine Anordnung von Punkten der 3D-Punktwolke in einer Anzahl größer als die Mindestdetektionsschwelle in einem Abstand von der ersten Geraden befindet, der geringer als der Mindestabstand ist,
- Bestimmen mindestens einer zweiten Geraden, die sich in einer zweiten Ebene senkrecht zur ersten Ebene befindet, bei der sich eine Teilanordnung der Anordnung von Punkten in einer Anzahl größer als die Mindestdetektionsschwelle in einem Abstand von der zweiten Geraden befindet, der geringer als der Mindestabstand ist,
- Wobei die Punkte der Teilanordnung eine Längsstruktur kennzeichnen.

3. Verfahren zur Detektion nach Anspruch 1, wobei die Suche mindestens einer Anordnung von im Wesentlichen ausgerichteten Punkten anhand der Schritte durchgeführt wird zum:

- Definieren von drei im 3D-Raum zueinander senkrecht stehenden Projektionsebenen, um mindestens eine Gerade zu bestimmen, die sich in der Ebene befindet, bei der sich eine Anordnung von Punkten der 3D-Punktwolke in einer Anzahl größer als die Mindestdetektionsschwelle in einem Abstand von der Geraden befindet, der geringer als der Mindestabstand ist,
- Sichern für jede im vorherigen Schritt bestimmte Gerade der Punktanordnungen, die sich in einem Abstand von der Geraden befinden, der geringer als der Mindestabstand ist,
- Aufbauen einer Punktanordnung, die eine Längsstruktur **kennzeichnet, durch** Auswählen der Punkte, die mindestens zwei Punktanordnungen angehören, die für zwei verschiedene Projektionsebenen gesichert worden sind.

4. Verfahren zur Detektion nach einem der vorstehenden Ansprüche, wobei die Geraden in einer Ebene durch einen ersten Abstandsparameter zwischen dem Ursprung einer Referenzmarkierung und der Geraden, und einen zweiten Winkelparameter zwischen einer Achse der Referenzmarkierung und einer Linie senkrecht zur Geraden, und durch den Ursprung der Referenzmarkierung verlaufend definiert sind.

5. Verfahren zur Detektion nach einem der vorstehenden Ansprüche, weiter umfassend einen Schritt zum Auswählen von Linien, bei denen die Summe der Amplituden der Punkte der Punktanordnung, die sich in einem Abstand zur Linie befinden, der kleiner als der Mindestabstand ist, größer als eine vorbestimmte Schwelle ist.

6. Verfahren zur Detektion nach einem der vorstehenden Ansprüche, wobei die Punkte der 3D-Punktwolke mithilfe einer Geolokalisierungsvorrichtung des bodendurchdringenden Radars geolokalisiert werden.

7. Verfahren zur Detektion nach einem der vorstehenden Ansprüche, wobei die Erfassungen von Radarsignalen für mehrere Ebenen der Zone des Bodens ausgeführt werden.

8. Bodendurchdringender Radar (1000), umfassend mindestens eine Sendeantenne und mindestens eine Empfangsantenne und eine Vorrichtung zur Detektion vergrabener Längsstrukturen, in einer Zone des Bodens, der konfiguriert ist, um die Schritte des Verfahrens zur Detektion nach einem der vorstehenden Ansprüche auszuführen.

9. Computerprogramm, das Anweisungen zur Ausführung des Verfahrens nach einem der Ansprüche 1 bis 7 beinhaltet, wenn das Programm durch einen Prozessor ausgeführt des Radars nach Anspruch 8 ausgeführt wird.

10. Von einem Prozessor lesbarer Aufzeichnungsträger, auf dem ein Programm aufgezeichnet ist, das Anweisungen zur Ausführung des Verfahrens nach einem der Ansprüche 1 bis 7, wenn das Programm von einem Prozessor des Radars nach Anspruch 8 ausgeführt wird, beinhaltet.

**Claims**

1. Detection method for buried longitudinal structures using a ground penetration radar, the method comprising the steps of:

- Carrying out (301) several radar signal acquisitions for a zone of the ground,
- Determining (302), from the radar signals, a 3D point cloud, each point corresponding to a radar detection and being geolocated in space, the method being **characterized in that** it further comprises the step of:

- Seeking (303) at least one group of substantially aligned points in the 3D point cloud:

i. For each straight line from a set of straight lines of the 3D space, by determining the number of points of the 3D point cloud located at a distance less than a minimum predetermined distance of the straight line,
ii. Determining at least one straight line for which the number of points is greater than a minimum predetermined detection threshold, the points located at a distance from this straight line less than the minimum distance characterizing a longitudinal structure.

2. Detection method according to claim 1, wherein the seeking (303) of at least one group of substantially aligned points is carried out using the steps of:

- Determining at least a first straight line located in a first plane for which a group of points of the 3D point cloud with a number greater than the minimum detection threshold is located at a distance from the first straight line less than the minimum distance,
- Determining at least a second straight line located in a second plane which is perpendicular to the first plane for which a sub-group of points of the group of points with a number greater than the minimum detection threshold is located at a distance from the second straight line less than the minimum distance,
- The points of the sub-group characterizing a longitudinal structure.

3. Detection method according to claim 1, wherein the seeking of at least one group of substantially aligned points is carried out using the steps of:

- Defining three mutually perpendicular projection planes in 3D space and, for each of the three planes, determining at least one straight line located in the plane for which a group of points of the 3D point cloud with a number greater than the minimum detection threshold is located at a distance from the straight line less than the minimum distance,
- Saving for each straight line determined in the preceding step the groups of points located at a distance from the straight line less than the minimum distance,
- Constructing a group of points which characterize a longitudinal structure by selecting the points which belong to at least two groups of points saved for two different projection planes.

4. Detection method according to any one of the preceding claims, wherein the straight lines are defined in a plane by a first distance parameter between the origin of a reference system and the straight line and a second angle parameter between an axis of the reference system and a line which is perpendicular to the straight line and which passes via the origin of the reference system.

5. Detection method according to any one of the preceding claims, further comprising a line selection step for which the sum of the amplitudes of the points of the group of points located at a distance from the line which is less than the minimum distance is greater than a predetermined threshold.

6. Detection method according to any one of the preceding claims, wherein the points of the 3D point cloud are geolocated using a geolocation device of the ground penetration radar.

7. Detection method according to any one of the preceding claims, wherein the radar signal acquisitions are carried out for several planes of the zone of the ground.

8. Ground penetration radar (1000) comprising at least one transmission antenna and at least one receiving antenna and a device for detecting buried longitudinal structures in a zone of the ground which is configured to carry out the steps of the detection method according to any one of the preceding claims.

9. Computer program comprising instructions for executing the method according to any one of claims 1 to 7, when the program is executed by a processor of the radar of claim 8.

10. Recording medium which can be read by a processor and on which a program comprising instructions for executing the method according to any one of claims 1 to 7 is recorded, when the program is executed by a processor of the radar of claim 8.

FIG.1

FIG.2

Acquisition radars — 301

Construction nuage de points 3D — 302

Filtrage — 304

Détection de lignes — 303

FIG.3

**401**

Images GPR-MIMO

Construction du
nuage de points

**302**

position

poids
(intensité image)

$[(x, y, z), w]$

z [m]

0
-0.5
-1
-1.5
-2

y [m]

6
5
4
3
2
1
0

X [m]

-1
0
1

**402**

EP 4 254 007 B1

FIG.4

$$(D) : \rho = x\,cos(\theta) + y\,sin(\theta)$$

FIG.5

FIG.6

FIG.7

EP 4 254 007 B1

FIG.8

EP 4 254 007 B1

FIG.9

FIG.10

501 — Début
- i = 1
- Ordonnancement décroissant (par poids)

502 — i > Nr ?
oui → Fin
non →

503 — Sélectionner le point de poids max

504 — Recherche des points alignés (N)

505 — N > Nmin ?
oui → 506 — Garder tous les points alignés
non → 507 — Eliminer le point sélectionné

508 — i = i+1

FIG.11a

FIG.11b

FIG.11c

FIG.11d

FIG.11e

FIG.11f

Points gardés

FIG.11g

FIG.11h

602

FIG.11i

602

Point rejeté

N < Nmin

FIG.11j

FIG.12

EP 4 254 007 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3111994
- US 2013321191 A1
- US 20131205 A1
- US 9965865 B1
- US 20180508 B1

**Littérature non-brevet citée dans la description**

- **G. ZHAN** ; **L. TSANG** ; **K. PAK**. Studies of the angular correlation function of scattering by random rough surfaces with and without a buried object. *IEEE Trans. Geosci. Remote Sens.*, March 1997, vol. 35 (2), 444-453
- **T. DOGARU** ; **L. CARIN**. Time-domain sensing of targets buried under a rough air-ground interface. *IEEE Trans. Antennas Propag.*, March 1998, vol. 46 (3), 360-372
- **J. BROOKS** ; **L. VAN KEMPEN** ; **H. SAHLI**. A primary study in adaptive clutter reduction and buried minelike target enhancement from GPR data. *Proc. SPIE Detection and Remediation Technology for Mines and Minelike Targets V*, 2000, 1183-1192
- **M. EL-SHENAWEE** ; **C. RAPPAPORT**. Monte Carlo simulations for clutter statistics in minefields: AP-mine-like-target buried near a dielectric object beneath 2-D random rough surfaces. *IEEE Trans. Geosci. Remote Sens.*, June 2002, vol. 40 (6), 1416-1426
- **D. D. CAREVIC** ; **M. CRAIG** ; **I. CHANT**. Modelling GPR echoes from landmines using linear combination of exponentially damped sinusoids. *Proc. SPIE Detection and Remediation Technology for Mines and Minelike Targets II*, 1998, vol. 3079, 1022-1032
- **RAFFAELE SOLIMENE** ; **A. CUCCARO** ; **A. DELL'AVERSANO** ; **ILARIA CATAPANO** ; **FRANCESCO SOLDOVIERI**. Ground Clutter Removal in GPR Surveys. *IEEE journal of selected topics in applied earth observations and remote sensing*, March 2014, vol. 7 (3)
- **U. S. KHAN** ; **W. AL-NUAIMY**. Background removal from GPR data using Eigen values. *13th Int. Conf. Ground Penetrating Radar (GPR)*, 2010
- **R. SOLIMENE** ; **A. D'ALTERIO**. Entropy based clutter rejection for intra-wall diagnostics. *Int. J. Geophys.*, 2012, vol. 2012, 7
- **CAPINERI, LORENZO et al.** Advanced image-processing technique for real-time interpretation of ground-penetrating radar images. *International Journal of Imaging Systems and Technology*, 1998, vol. 9
- **CARLOTTO, MARK**. Detecting buried mines in ground penetrating radar using a Hough transform approach. *Proceedings of SPIE - The International Society for Optical Engineering*, 2002